# EUROPEAN PATENT SPECIFICATION

(11) **EP 1 146 026 B1**
(45) Date of publication and mention of the grant of the patent: **23.01.2013**
(21) Application number: 00937304.4
(22) Date of filing: 19.06.2000
(51) Int. Cl.: C04B 37/02, H01H 3/32

(54) **JOINING METHOD FOR CERAMICS AND METAL AND JOINED BODY OF CERAMICS AND METAL JOINED BY THE METHOD**
VERBINDUNGSVERFAHREN ZUM VERBINDEN VON KERAMIKEN UND METALLEN UND NACH DIESEM VERFAHREN AUS KERAMIKEN UND METALLEN ZUSAMMENGESETZTE FORMKÖRPER
PROCEDE D'ASSEMBLAGE POUR CERAMIQUE ET METAL ET CORPS DE CERAMIQUE ET METAL ASSEMBLE PAR CE PROCEDE

(30) Priority: 01.11.1999 JP 31093199
(43) Date of publication of application: 17.10.2001
(73) Proprietor: MITSUBISHI DENKI KABUSHIKI KAISHA, Chiyoda-ku Tokyo 100-8310 (JP)
(72) Inventor: MIYAMOTO, Seiichi, Mitsubishi Denki KK, Chiyoda-ku, Tokyo 100-8310 (JP); MARUYAMA, Toshimasa, Mitsubishi Denki KK, Chiyoda-ku, Tokyo 100-8310 (JP); SATO, Toshifumi, Mitsubishi Denki KK, Chiyoda-ku, Tokyo 100-8310 (JP); ITOTANI, Takayuki,Mitsubishi Denki KK, Chiyoda-ku, Tokyo 100-8310 (JP); KOBAYASHI, Minoru, Mitsubishi Denki KK, Chiyoda-ku, Tokyo 100-8310 (JP)
(74) Representative: HOFFMANN EITLE
(86) International application number: PCT/JP2000/003996
(87) International publication number: WO 2001/032584

(56) References cited:
- EP-A- 0 286 335
- EP-A- 0 726 238
- EP-A- 0 945 414
- FR-A- 1 217 865
- GB-A- 844 171
- JP-A- 2 196 075
- JP-A- 3 261 670
- JP-A- 4 198 068
- JP-A- 5 319 946
- JP-A- 6 172 051
- JP-A- 61 117 169
- JP-A- 62 056 381
- JP-A- 63 139 077

## Description

### TFCHNICAI FIELD

This invention relates to a method for bonding ceramics and metal together by brazing and a portion of an operating rod of a switch being a coaxially bonded rod-like assembly of ceramics and a metal in which metal rods are brazed at the opposite ends of a ceramic rod.

### BACKGROUND ART

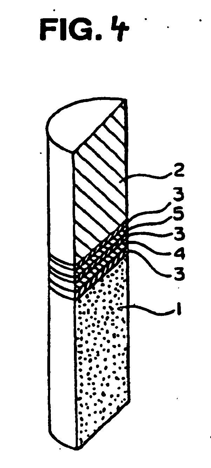

A conventional method and a bonded assembly will be described in conjunction with Fig. 4 :

Fig. 4 is a bonded assembly disclosed in Japanese Patent Laid-Open No. 1-299790, in which a nickel plate 4 and a tungsten plate 5 or the like are interposed as an intermediate material between alumina 1 as ceramics and nickel rod 2 as a metal. In the figure, 3 is a brazing material.

Since metal has a thermal expansion coefficient greater than the alumina and shrinks at a higher rate than alumina while the temperature is decreasing at which the molten brazing material is hardening, a compression stress is generated at the central portion of the alumina at which it is bonded to metal and a tensile stress is generated at its peripheral portion and stress remains at a room temperature. Such large residual tensile stress is undesirable because alumina is brittle against the tensile force while it is strong against the compression.

The intermediate material is a member for absorbing the above residual stress and used for obtaining the stability of the strength as the bonded assembly.

Other examples of the intermediate materials include, as described in "Ceramic Bonding Technology", Nobuya Kishimoto and Tadakazu Suga, published by the Nikkan Kogyo News Paper, 1990, Niobium (Nb), molybdenum (Mo), aluminum (Al), copper (Cu), an alloy of iron-nickel-chromium (Fe-Ni-Cr), copper-carbon (Cu-C), aluminum-silicon carbide (Al-SiC), foam metal, porous material and the like.

The above intermediate materials were indispensable in the conventional bonding method and the bonded assembly according to such the method. Therefore, upon the bonding operation, the number of the parts are large, assembly is difficult and time consuming and the manufacturing cost is high.

Also, when the surface condition of the intermediate material is poor, a sufficiently strong bonding strength cannot be obtained, so that the surface condition must be sufficiently managed.
D1: JP-A-6 172 051
D2: JP-A-5 319 946
D3: JP-A-3 261 670
D4: JP-A-2 196 075
D5: JP 61 117 169 A
D6: JP 62 056 381 A
D7: JP-A-4 198 068
D8: JP 63 139 077 A
disclose metal bonded to ceramic by brazing, whereby the area of contact is less than 90 % of the area of the ceramic surface to be joined.

EP-A-0 286 335 discloses alumina tubes sealed by metallic end cabs, using brazing material containing Ti and Zr. The relative areas are not explicitly mentioned, but, judging from the figures, the area of bonding appears to be less than 90 %.
D10: EP-A-0 945 414
D11: EP-A-0 726 238
D12: FR-A-1 217 865
D13: GB 844 171 A
disclose ceramic members joined to metal members via an active material. The area of bonding, judging from the figures, appears to be less than 90 %.

The present invention has as its object the provision of a bonding method and a bonded assembly in which above problems are solved.

### DISCLOSURE OF INVENTION

The above objects are achieved by providing the bonding method according to claim 1 and the portion of an operating rod of a switch according to claim 6. Preferred embodiments are set forth in the dependent claims.

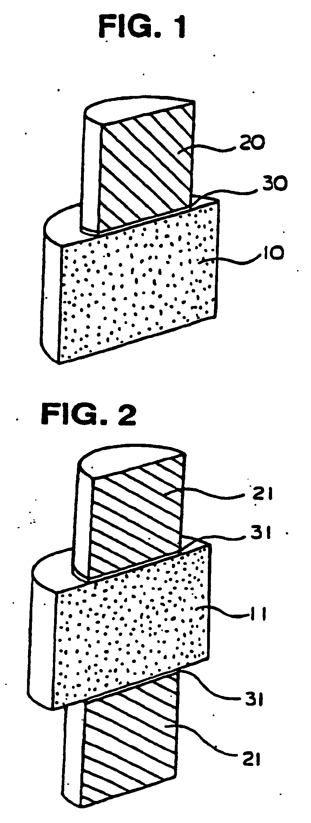

. The feature of the present invention is, as shown in Fig. 1 in sectional views of the bonded assembly of ceramics 10 and a metal 20, in the brazing bonding surface (hereinafter referred to simply as bonding surface) between the ceramics 10 and the metal 20, the bonding surface area of the metal 20 is made smaller than the bonding surface area of the ceramics 10 by making it not exceeding 90% of the bonding surface area of the ceramics 10, for example. Both bonding surfaces are made flat for ceramics 10 and metal 20 for better results. By this bonding method, the tensile residual stress can be alleviated at the ceramics 10 side without using the intermediate material.

In this application, the bonding surface of the metal 20 means, literally, the entire surface that is brought into substantial contact with and bonded to the ceramics 10 side. On the other hand, the bonding surface of the ceramics 10 means the region out of which the tensile residual stress on the ceramics 10 due to the thermal expansion difference relative to the metal 20 becomes neglectably small and includes the surface portion at which it is in substantial contact with the metal 20 side as well as the surface in which the above surface portion and its extension that does not contact with metal 20 side. The negligibly small as to the residual tensile stress refers to the extent at which the stress does not show any undesirable effects on the stability of the strength required to the bonded assembly.

For use as an electrically insulating rod of a switch apparatus, the above-mentioned ceramics may preferably be alumina (alumina ceramics).

As for the metal, the preferable metal includes not only copper, but also alloys containing copper as a main component such as copper-zinc (Cu-Zn), copper-tin (Cu-Sn), copper-chromium (Cu-Cr), copper-zirconium (Cu-Zr), copper-beryllium (Cu-Be), copper-titanium (Cu-Ti), and nickel (Ni) and its alloys containing nickel as a main component such as nickel-copper (Ni-Cu), Monel and Inconel, and iron (Fe) and its alloys containing iron as a main component such as iron-nickel (Fe-Ni), Kovar and Incoloy. Monel, Inconel, Kovar and Incoloy are all trade names.

According to experiments, when the bonding surface area of the metal 20 exceeds 90%, a large thermal stress remains in the ceramics, resulting in the decrease in the strength of the brazed bonding and the generation of breakage of the ceramics upon the completion of the brazing.

When an active metal brazing material containing a suitable amount of titanium (Ti), zirconium (Zr) and the like is used, the step of metallizing or nickel plating the bonding surface may be omitted and still a bonded assembly exhibiting a sufficient bonding strength can be obtained.

Therefore, according to the present invention, the metallization or the nickel plating of the bonding surface of the members to be bonded can be eliminated.

### BRIEF DESCRIPTION OF THE DRAWINGS

Fig. 1 is a diagrammatic vertical sectional view showing one embodiment of the present invention;
Fig. 2 is a diagrammatic vertical sectional view showing a portion of the operating rod of a switch of the first embodiment;

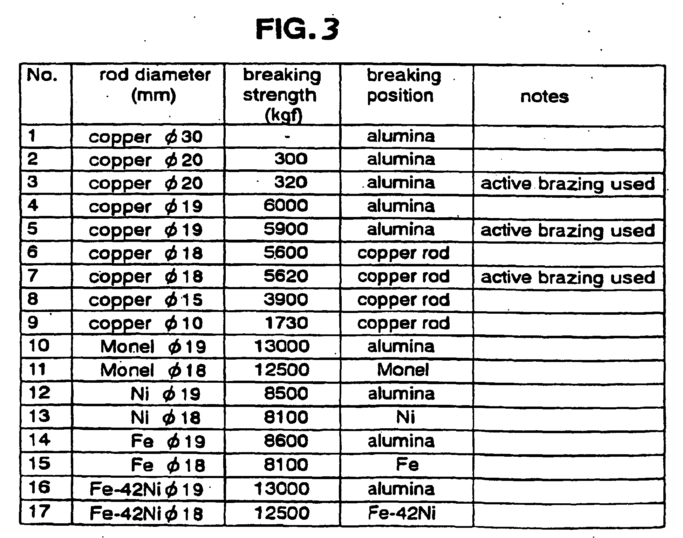

Fig. 3 is a table showing the experimental results of the present invention; and
Fig.4 is a typical vertical sectional view showing a conventional technique.

### BEST MODES FOR CARRYING OUT THE INVENTION

The embodiments of the present invention will now be described with a bonded assembly of a ceramic and a metal taken as an example.

While the portion of an operating rod of a switch in this example is in the form of having ceramics as an insulator in the middle and having metal of the same kind is bonded at each end of the ceramics and having two bonded portions, only one of the bonded portions will be described because the two bonded portions are similar to each other.

### Embodiment 1

In the embodiment shown in Fig. 2, in this first embodiment, an alumina ceramic rod 11 of φ20×L20mm metallized and nickel plated at the brazing surface and a copper rod (Cu) 21 selected from the ones of LSOmm and different outer diameter of φ30, 20, 19, 18, 15 and 10mm are stacked in an upright position with a brazing material (BAg-8) 31 having a thickness of 0.1mm sandwiched therebetween and heated at 800°C × 5min, under a vacuum of 1 × 10⁻⁵Torr to braze them.

After the brazing, the copper rods (Cu) 21 brazed at the opposite ends of the ceramic rod 11 are measured as to its tensile brazed strength by a tensile testing machine and the results as shown in the table of Fig. 6 were obtained.

According to the table, when the diameter of the copper rod (Cu) 21 is small, the breakage took place at the copper rod (Cu) 21, but the breakage moves to the ceramic rod 11 when the diameter of the copper rod (Cu) 21 becomes larger and when the diameter of the copper rod (Cu) 21 is larger than the diameter of the ceramic rod 11, cracks generate in the ceramic rod 11 at the time of completion of the brazing and it was not possible to subjected to the tensile test of the samples.

The breakage of the ceramic rod 11 is due to the residual thermal stress and particularly to the residual tensile stress, which causes the breakage of the ceramic rod 11 to initiate and significantly decrease the strength from the point about where the bonding surface area of the copper rod (Cu) 21 exceeds about 90% of the bonding surface area of the ceramics rod 11.

From these results, it is understood that the bonding surface area of the copper rod (Cu) 21 is equal to or less than about 90% of the bonding surface area of the ceramic rod 11.

### Embodiment 2

In the embodiment shown in Fig. 2, an alumina ceramic rod 11 of φ 20 × 1.20mm without being metallized at the brazing surface and a copper rod (Cu) 21 selected from the ones of L50mm and different outer diameter of φ 20, 19 and 18mm are stacked in an upright position with an active brazing material 31 containing titanium (Ti) and having a thickness of 0.1mm, such as a commercially available brazing material of silver-copper-titanium (Ag-Cu-Ti), sandwiched therebetween and heated at 900°C×5min. under a vacuum of 1 × 10⁻⁵Torr to braze them.

After the brazing, the brazed assembly was measured as to its tensile brazed strength by a tensile testing machine in a manner similar to that of the first embodiment and the results as shown in the table of Fig. 6 were obtained.

According to the table, the brazing strength was not very much different from the case where the metallized surface was bonded by a commercially available brazing material (B-Ag⁻⁸).

### Embodiment 3.

In the embodiment shown in Fig. 2, an alumina ceramic rod 11 of φ 20 × L20mm metallized and nickel plated at the brazing surface and a rod 21 selected from the ones of Monel, Ni, Fe, Fe-42Ni rod 21 of L50mm and different outer diameter of φ19 and 18mm are stacked in an upright position with a commercially available brazing material (BAg-8) 31 having a thickness of 0.1mm sandwiched therebetween and heated at 800°C × 5min, under a vacuum of 1 × 10⁻⁵Torr to braze them.

After the brazing, the brazed assembly was measured as to its tensile brazed strength by a tensile testing machine in a manner similar to that of the first and second embodiments and the results as shown in the table of Fig. 6 were obtained.

According to the table, while there is a difference in the breaking strength, the breakage of the ceramic rod 11 was initiated from the point about where the bonding surface area of the metal rod 21 exceeds 90% of the bonding surface area of the ceramic rod 11 and the decrease in strength was significantly large.

This trend is similar to the case of copper (Cu) and the bonding surface area of the copper rod should be equal to or less than 90% of the bonding surface area of the alumina ceramics.

### INDUSTRIAL APPLICABILITY

According to the inventions as recited in claims 1 to 6 a reliable bonding method for the ceramics and the metal in which the intermediate material is not needed and the number of the parts is reduced, the assembly is easy, the manufacturing cost is low and in which the bonding strength is high.

According to the invention as redted in claim 6 an inexpensive portion of an operating rod of a switch in which the ceramics and the metal are bonded with a sufficient brazing strength and which can be easily manufactured with a low manufacturing cost.

## Claims

1. A bonding method for bonding ceramics and a metal to each other by brazing, thereby forming a portion of an operating rod of a switch in which metal rods (21) are brazed at the opposite ends of a ceramic rod (11) to obtain a coaxially bonded rod-like assembly,
said ceramics rods (11) each has a cross-sectional shape that is symmetrical relative to the longitudinal axis of the rod;
wherein said ceramic rod and said metal rods have cylindrical shape,
wherein the metal rods are solid,
wherein the area of the bonding surface of the metal rods (21) at which the metal rods (21) are joined to the ceramic rod (11) is not exceeding 90% of the area of the surface of said ceramic rod (11) to be bonded to the metal rods (21),
wherein the bonding surface of the metal means the entire surface that is brought into substantial contact with and bonded to the ceramic side,
wherein bonding surface of the ceramics means the region out of which the tensile residual stress on the ceramics due to the thermal expansion difference relative to the metal becomes neglectably small and includes the surface portion at which it is in substantial contact with the metal side as well as its extension that does not contact with the metal side, and
wherein said bonding surfaces are flat surfaces.

2. The bonding method for bonding ceramics and a metal as claimed in claim 1, wherein said ceramics is alumina, and said metal is copper, nickel or iron.

3. The bonding method for bonding ceramics and a metal as claimed in claim 1, wherein said ceramics is alumina, and said metal is an alloy including as a main component at least one of copper, nickel and iron.

4. The bonding method for bonding ceramics and a metal as claimed in claim 1, wherein a brazing material with an active metal is used when there is no metallized surface formed on the bonding surface of the ceramics.

5. The bonding method for bonding ceramics and a metal as claimed in claim 4, wherein said active metal is titanium or zirconium.

6. A portion of an operating rod of a switch being a coaxially bonded rod-like assembly of ceramics and a metal in which metal rods (21) are brazed at the opposite ends of a ceramic rod (11),
said ceramics rods (11) each has a cross-sectional shape that is symmetrical relative to the longitudinal axis of the rod;
wherein said ceramic rod and said metal rods have cylindrical shape,
wherein the metal rods are solid,
wherein the area of the bonding surface of the metal rods (21) at which the metal rods (21) are joined to the ceramic rod (11) is not exceeding 90% of the area of the surface of said ceramic rod (11) to be bonded to the metal rods (21),
wherein the bonding surface of the metal means the entire surface that is brought into substantial contact with and bonded to the ceramic side,
wherein bonding surface of the ceramics means the region out of which the tensile residual stress on the ceramics due to the thermal expansion difference relative to the metal becomes neglectably small and includes the surface portion at which it is in substantial contact with the metal side as well as its extension that does not contact with the metal side, and
wherein said bonding surfaces are flat surfaces.

## Patentansprüche

1. Verbindungsverfahren zum miteinander Verbinden von Keramik und einem Metall durch Löten, wodurch ein Bereich eines Betätigungsstabs eines Schalters ausgebildet wird, in dem Metallstäbe (21) an entgegengesetzten Enden eines Keramikstabs (11) gelötet sind, um eine koaxial verbundene stabartige Anordnung zu erhalten,
wobei die Keramikstäbe (11) jeweils eine Querschnittsform aufweisen, die relativ zu der longitudinalen Achse des Stabs symmetrisch ist,
wobei der Keramikstab und die Metallstäbe eine zylindrische Form aufweisen,
wobei die Metallstäbe fest sind,
wobei der Bereich der Verbindungsfläche der Metallstäbe (21), an dem die Metallstäbe (21) mit dem Keramikstab (11) verbunden sind, 90 % des Bereichs der Fläche des mit den Metallstäben (21) zu verbindenden Keramikstabs (11) nicht übersteigt,
wobei die Verbindungsfläche des Metalls die gesamte Fläche bedeutet, die mit dem keramischen Bereich in substantielle Berührung gebracht und verbunden wird,
wobei die Verbindungsfläche der Keramik die Region bedeutet, außerhalb derer die Zugeigenspannung auf die Keramik aufgrund des thermischen Ausdehnungsunterschiedes relativ zu dem Metall vernachlässigbar klein wird und den Flächenbereich beinhaltet, bei dem sie in substantieller Berührung mit der Metallseite steht, sowie deren Erweiterung, die nicht in Kontakt mit der Metallseite steht, und
wobei die Bindungsflächen flache Flächen sind.

2. Verbindungsverfahren zum Verbinden von Keramik und einem Metall gemäß Anspruch 1, wobei die Keramik Aluminiumoxid ist und das Metall Kupfer, Nickel oder Eisen ist.

3. Verbindungsverfahren zum Verbinden von Keramik und einem Metall gemäß Anspruch 1, wobei die Keramik Aluminiumoxid ist und das Metall eine Legierung ist, die als Hauptbestandteil wenigstens eines von Kupfer, Nickel und Eisen einschliesst.

4. Verbindungsverfahren zum Verbinden von Keramik und einem Metall gemäß Anspruch 1, wobei ein Lötmaterial mit einem aktiven Metall verwendet wird, wenn es keine metallisierte Fläche, die auf der Bindungsfläche der Keramik gebildet ist, gibt.

5. Verbindungsverfahren zum Verbinden von Keramik und einem Metall gemäß Anspruch 4, wobei das aktive Metall Titan oder Zirkonium ist.

6. Bereich eines Betätigungsstabs eines Schalters, der eine koaxial verbundene stabartige Anordnung von Keramik und einem Metall ist, in dem Metallstäbe (21) auf entgegengesetzte Seiten eines Keramikstabs (11) gelötet sind,
wobei die Keramikstäbe (11) jeweils eine Querschnittsform aufweisen, die relativ zu der longitudinalen Achse des Stabs symmetrisch ist,
wobei der Keramikstab und die Metallstäbe eine zylindrische Form aufweisen,
wobei die Metallstäbe fest sind,
wobei der Bereich der Verbindungsfläche der Metallstäbe (21), an dem die Metallstäbe (21) mit dem Keramikstab (11) verbunden sind, 90 % des Bereichs der Fläche des mit den Metallstäben (21) zu verbindenden Keramikstabs (11) nicht übersteigt,
wobei die Verbindungsfläche des Metalls die gesamte Fläche bedeutet, die mit dem keramischen Bereich in substantielle Berührung gebracht und verbunden wird,
wobei die Verbindungsfläche der Keramik die Region bedeutet, außerhalb derer die Zugeigenspannung auf die Keramik aufgrund des thermischen Ausdehnungsunterschiedes relativ zu dem Metall vernachlässigbar klein wird und den Flächenbereich beinhaltet, bei dem sie in substantieller Berührung mit der Metallseite steht, sowie deren Erweiterung, die nicht in Kontakt mit der Metallseite steht, und
wobei die Bindungsflächen flache Flächen sind.

## Revendications

1. Procédé de liaison pour lier une céramique et un métal l'un à l'autre par brasage, formant de ce fait une partie d'une tige de commande d'un commutateur dans lequel des tiges métalliques (21) sont brasées aux extrémités opposées d'une tige en céramique (11) pour obtenir un ensemble du type à tiges liées coaxialement,
lesdites tiges en céramique (11) ont chacune une forme en coupe qui est symétrique par rapport à l'axe longitudinal de la tige ;
dans lequel ladite tige en céramique et lesdites tiges métalliques ont une forme cylindrique,
dans lequel les tiges métalliques sont pleines,
dans lequel l'aire de la surface de liaison des tiges métalliques (21) au niveau de laquelle les tiges métalliques (21) sont jointes à la tige en céramique (11) ne dépasse pas 90 % de l'aire de la surface de ladite tige en céramique (11) à lier aux tiges métalliques (21),
dans lequel la surface de liaison du métal signifie la surface entière qui est amenée sensiblement en contact avec le côté en céramique et liée à celui-ci,
dans lequel la surface de liaison de la céramique signifie la région en-dehors de laquelle la contrainte de traction résiduelle sur la céramique due à la différence de dilatation thermique par rapport au métal devient négligeable et comprend la partie de surface au niveau de laquelle elle est sensiblement en contact avec le côté métallique ainsi que son extension qui n'est pas en contact avec le côté métallique, et
dans lequel lesdites surfaces de liaison sont des surfaces plates.

2. Procédé de liaison pour lier une céramique et un métal selon la revendication 1, dans lequel ladite céramique est l'alumine, et ledit métal est le cuivre, le nickel ou le fer.

3. Procédé de liaison pour lier une céramique et un métal selon la revendication 1, dans lequel ladite céramique est l'alumine, et ledit métal est un alliage comprenant, en tant que composant principal, au moins l'un du cuivre, du nickel et du fer.

4. Procédé de liaison pour lier une céramique et un métal selon la revendication 1, dans lequel un matériau de brasage avec un métal actif est utilisé lorsqu'il n'y a pas de surface métallisée formée sur la surface de liaison de la céramique.

5. Procédé de liaison pour lier une céramique et un métal selon la revendication 4, dans lequel ledit métal actif est le titane ou le zirconium.

6. Partie d'une tige de commande d'un commutateur qui est un ensemble du type à tiges liées coaxialement de céramique et de métal dans lequel des tiges métalliques (21) sont brasées aux extrémités opposées d'une tige en céramique (11),
lesdites tiges en céramique (11) ont chacune une forme en coupe qui est symétrique par rapport à l'axe longitudinal de la tige ;
dans laquelle ladite tige en céramique et lesdites tiges métalliques ont une forme cylindrique,
dans laquelle les tiges métalliques sont pleines,
dans laquelle l'aire de la surface de liaison des tiges métalliques (21) au niveau de laquelle les tiges métalliques (21) sont jointes à la tige en céramique (11) ne dépasse pas 90 % de l'aire de la surface de ladite tige en céramique (11) à lier aux tiges métalliques (21),
dans laquelle la surface de liaison du métal signifie la surface entière qui est amenée sensiblement en contact avec le côté en céramique et liée à celui-ci,
dans laquelle la surface de liaison de la céramique signifie la région en-dehors de laquelle la contrainte de traction résiduelle sur la céramique due à la différence de dilatation thermique par rapport au métal devient négligeable et comprend la partie de surface au niveau de laquelle elle est sensiblement en contact avec le côté métallique ainsi que son extension qui n'est pas en contact avec le côté métallique, et
dans laquelle lesdites surfaces de liaison sont des surfaces plates.
